# EUROPEAN PATENT APPLICATION

(11) **EP 4 745 442 A1**
(43) Date of publication of application: **20.05.2026**
(21) Application number: 25835167.5
(22) Date of filing: 25.07.2025
(51) Int. Cl.: F16K 27/00, F25B 41/26

(54) **REFRIGERANT FLOW PATH MODULE AND METHOD FOR MANUFACTURING SAME**

(30) Priority: 24.09.2024 JP 2024165206
(71) Applicant: DAIKIN INDUSTRIES, LTD., Osaka-Shi, Osaka 530-0001 (JP)
(72) Inventor: HAMADATE, Junichi, Osaka-shi, Osaka 530-0001 (JP); KOIKE, Fumiaki, Osaka-shi, Osaka 530-0001 (JP); KINOSHITA, Atsushi, Osaka-shi, Osaka 530-0001 (JP); ISHIYAMA, Taichi, Osaka-shi, Osaka 530-0001 (JP)
(74) Representative: Hoffmann Eitle
(86) International application number: PCT/JP2025/026449
(87) International publication number: WO 2026/069991

(57) **Abstract**

A refrigerant flow path module (40) includes a flow path unit (32) provided with a first refrigerant flow path (R1) and a second refrigerant flow path (R2) through which a refrigerant flows, and a casing (33) that accommodates the flow path unit (32), in which the flow path unit (32) is formed with a synthetic resin or a material containing aluminum as a main component, and the casing (33) is formed with a steel material.

## Description

### TECHNICAL FIELD

The present disclosure relates to a refrigerant flow path module and a method for manufacturing the same.

### BACKGROUND ART

Patent Literature 1 below discloses a flow rate adjustment valve that adjusts a fluid flow rate by rotation of a cylindrical valve body housed in a valve case. The valve case and the valve body in the flow rate adjustment valve are both made of resin.

### CITATION LIST

### [PATENT LITERATURE]

Patent Literature 1: Japanese Laid-Open Utility Model Publication No. S61-23567

### SUMMARY OF THE INVENTION

### [TECHNICAL PROBLEM]

In the flow rate adjustment valve described in Patent Literature 1, the valve case and the valve body, which are made of resin, can be formed by molding with a metal die or the like, and manufacturability and processability can be enhanced. However, it is disadvantageous in terms of pressure resistance to use the flow rate adjustment valve described in Patent Literature 1 as in an air conditioner to cause a refrigerant having a high pressure due to a compressor to flow.

An object of the present disclosure is to provide a refrigerant flow path module capable of enhancing pressure resistance and a method for manufacturing the refrigerant flow path module.

### [SOLUTION TO PROBLEM]

(1) A refrigerant flow path module of the present disclosure includes
   a flow path unit provided with a first refrigerant flow path and a second refrigerant flow path through which a refrigerant flows, and
   a casing that accommodates the flow path unit, in which
   the flow path unit is formed with a synthetic resin or a material containing aluminum as a main component, and
   the casing is formed with a steel material.
   Since the flow path unit having the first and second refrigerant flow paths is formed with synthetic resin or a material containing aluminum as a main component, the above configuration can enhance manufacturability and processability of the flow path unit. Since the flow path unit is accommodated in the casing including a steel material having higher rigidity than the flow path unit, pressure resistance of the flow path unit can be enhanced by the casing even if a high pressure refrigerant flows in the first refrigerant flow path and the second refrigerant flow path and a high pressure is applied to the flow path unit.
(2) In the refrigerant flow path module according to (1),
   the casing has openings communicating with the first refrigerant flow path and the second refrigerant flow path, and
   the refrigerant flow path module further includes pipes joined to the casing at peripheral edges of the openings.
   Since the pipes are joined to the casing, the above configuration can suppress leakage of the refrigerant from gaps between the casing and the pipes.
(3) In the refrigerant flow path module according to (1) or (2), the casing includes stainless steel.
   The above configuration can enhance corrosion resistance of the casing.
(4) In the refrigerant flow path module according to any one of (1) to (3),
   the flow path unit includes a hollow portion communicating with the first refrigerant flow path, and
   the refrigerant flow path module further includes a valve body accommodated in the hollow portion.
   In the above configuration, since the flow path unit is formed with synthetic resin or a material containing aluminum as a main component, the hollow portion can be easily formed. In the above configuration, the refrigerant flow path module, which includes the valve body, can be used as a valve such as a flow path switching valve for controlling a flow of the refrigerant.
(5) In the refrigerant flow path module according to (4), the valve body has a passage communicable with the first refrigerant flow path.
(6) In the refrigerant flow path module according to (4) or (5), the valve body is formed with synthetic resin or a material containing aluminum as a main component.
   The above configuration can enhance manufacturability and processability of the valve body. In a case where the valve body has a passage, the manufacturability and processability of the valve body can be further enhanced.
(7) In the refrigerant flow path module according to any one of (4) to (6), the second refrigerant flow path does not communicate with the hollow portion and penetrates the flow path unit.
   In the above configuration, a flow of the refrigerant not controlled by the valve body can be formed in the refrigerant flow path module.
(8) A method for manufacturing the refrigerant flow path module according to any one of (1) to (7) includes
   a first step of die-molding the flow path unit, and
   a second step of accommodating the flow path unit in the casing in an order of the first step and the second step.
   In the above configuration, in the first step, the first refrigerant flow path and the second refrigerant flow path can be easily formed in the flow path unit.
(9) A method for manufacturing the refrigerant flow path module according to (2) includes
   a first step of inserting the pipes into the openings and welding the pipes to the casing, and
   a second step of accommodating the flow path unit in the casing and connecting the pipes to the first and second refrigerant flow paths in an order of the first step and the second step.
   Since the first step of welding the pipes to the casing is performed before the second step of accommodating the flow path unit in the casing, the above configuration can prevent heat at the time of welding from being transmitted to the flow path unit.
(10) In a method for manufacturing the refrigerant flow path module according to any one of (1) to (7),
   the casing of the refrigerant flow path module includes a plurality of constituent members,
   the method includes
   a first step of accommodating the flow path unit in the casing, and
   a second step of joining the plurality of constituent members by welding in an order of the first step and the second step, and
   in the second step, a gap is formed between the flow path unit accommodated in the casing and a joint of the plurality of constituent members.

The above configuration can suppress transfer of heat to the flow path unit when the plurality of constituent members constituting the casing is welded.

### BRIEF DESCRIPTION OF DRAWINGS

[FIG. 1] FIG. 1 is a diagram of a refrigerant circuit of a refrigeration cycle apparatus including a refrigerant flow path module according to a first embodiment of the present disclosure.
[FIG. 2] FIG. 2 is a plan view of an interior of an outdoor unit.
[FIG. 3] FIG. 3 is a front view of a machine chamber of the outdoor unit.
[FIG. 4] FIG. 4 is a perspective view of the refrigerant flow path module.
[FIG. 5] FIG. 5 is an exploded perspective view of the refrigerant flow path module.
[FIG. 6] FIG. 6 is a sectional view schematically showing a structure of the refrigerant flow path module.
[FIG. 7] FIG. 7 is a perspective view of a flow path unit of the refrigerant flow path module.
[FIG. 8] FIG. 8 is a perspective view of a valve body of the refrigerant flow path module.
[FIG. 9] FIG. 9 is a sectional view of the refrigerant flow path module taken along line IX-IX in FIG. 4.
[FIG. 10] FIG. 10 is a sectional view describing an action of a refrigerant flow path module according to a first mode.
[FIG. 11] FIG. 11 is a sectional view describing an action of a refrigerant flow path module according to a second mode.
[FIG. 12] FIG. 12 is an enlarged sectional view of a portion XII indicated in FIG. 10.
[FIG. 13] FIG. 13 is a perspective view of a refrigerant flow path module according to a second embodiment of the present disclosure.
[FIG. 14] FIG. 14 is an exploded perspective view of the refrigerant flow path module.
[FIG. 15] FIG. 15 is a sectional view schematically showing a structure of a refrigerant flow path module according to a third embodiment of the present disclosure.
[FIG. 16] FIG. 16 is a sectional view schematically showing a structure of a refrigerant flow path module according to a fourth embodiment of the present disclosure.
[FIG. 17] FIG. 17 is a sectional view schematically showing a structure of a refrigerant flow path module according to a fifth embodiment of the present disclosure.

### DETAILED DESCRIPTION

Embodiments of the present disclosure will be described in detail with reference to the accompanying drawings.

### [First embodiment]

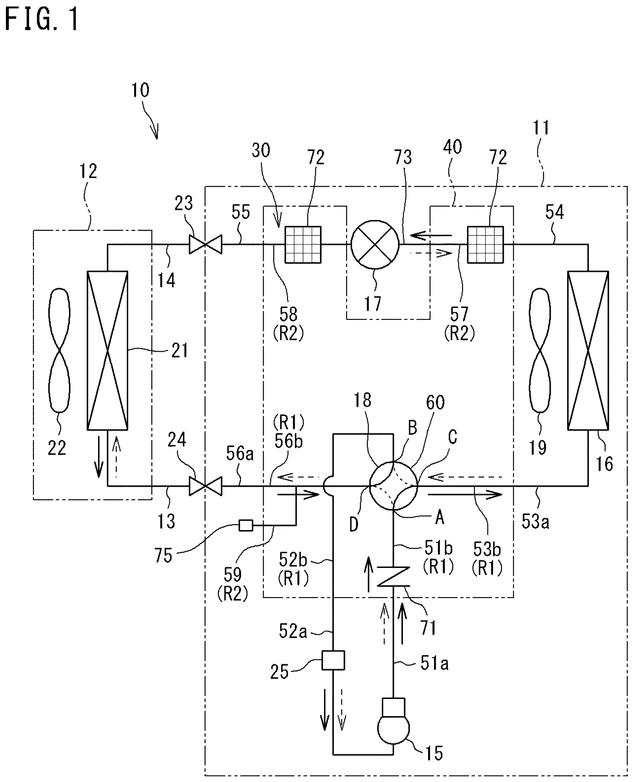

FIG. 1 is a diagram of a refrigerant circuit of a refrigeration cycle apparatus including a refrigerant flow path module according to a first embodiment of the present disclosure.

A refrigeration cycle apparatus 10 includes a refrigerant circuit 30 that executes a vapor compression refrigeration cycle operation. The refrigeration cycle apparatus 10 according to the present embodiment is an air conditioner. As shown in FIG. 1, this air conditioner 10 includes an outdoor unit (heat source unit) 11 and an indoor unit (utilization unit) 12. The outdoor unit 11 and the indoor unit 12 are connected by connection pipes 13 and 14, respectively. The outdoor unit 11, the indoor unit 12, and the connection pipes 13 and 14 form the refrigerant circuit 30. In the outdoor unit 11, shutoff valves 23 and 24 are provided at connecting portions of the connection pipes 13 and 14. The refrigeration cycle apparatus 10 is not limited to an air conditioner but may be a refrigerator, a freezer, a hot-water supplier, a ventilator, or the like.

### (Configuration of refrigerant circuit)

As shown in FIG. 1, the outdoor unit 11 is provided with a compressor 15, an accumulator 25, an outdoor heat exchanger (heat-source heat exchanger; second heat exchanger) 16, an expansion valve 17, and a four-way switching valve (flow path switching valve) 18 constituting the refrigerant circuit 30. The outdoor unit 11 is also provided with an outdoor fan 19. The indoor unit 12 is provided with an indoor heat exchanger (utilization heat exchanger; first heat exchanger) 21 constituting the refrigerant circuit 30. The indoor unit 12 is also provided with an indoor fan 22. In the present embodiment, the four-way switching valve 18 includes a modularized or integrated refrigerant flow path module 40 including refrigerant flow paths 51b, 52b, 53b, and 56b connected thereto and other refrigerant flow paths 57, 58, and 59. Details of this configuration will be described later.

The compressor 15 is, for example, a positive displacement compressor such as a scroll type or a rotary type, and incorporates a compressor motor. The compressor 15 compresses a refrigerant sucked from a suction pipe 52a, and then discharges the compressed refrigerant from a discharge pipe 51a. In the outdoor unit 11, a discharge side of the compressor 15 is connected to a port A of the four-way switching valve 18 via the discharge pipe 51a that is a refrigerant pipe and the refrigerant flow path 51b in the refrigerant flow path module 40. The refrigerant flow path 51b is provided with a check valve 71 that suppresses backflow of the refrigerant.

A suction side of the compressor 15 is connected to a port B of the four-way switching valve 18 via the suction pipe 52a that is a refrigerant pipe and the refrigerant flow path 52b in the refrigerant flow path module 40. The accumulator 25 is provided in the middle of the suction pipe 52a.

The outdoor heat exchanger 16 includes a cross-fin type fin-and-tube heat exchanger, a microchannel heat exchanger, or the like. A gas-side end of the outdoor heat exchanger 16 is connected to a port C of the four-way switching valve 18 via the refrigerant pipe 53a and the refrigerant flow path 53b in the refrigerant flow path module 40. A liquid-side end of the outdoor heat exchanger 16 is connected to one end side of the expansion valve 17 via the refrigerant pipes 54 and 73 and the refrigerant flow path 57 in the refrigerant flow path module 40. The refrigerant flow path 57 is provided with a strainer (filter) 72 that removes foreign substances in the refrigerant.

The expansion valve 17 is, for example, an electric valve whose opening degree is adjustable. The other end of the expansion valve 17 is connected to the liquid-side shutoff valve 23 via the refrigerant flow path 58 and the refrigerant pipe 55 in the refrigerant flow path module 40. The refrigerant flow path 58 is provided with the strainer (filter) 72 that removes foreign substances in the refrigerant.

The indoor heat exchanger 21 includes a cross-fin type fin-and-tube heat exchanger, a microchannel heat exchanger, or the like. A liquid-side end of the indoor heat exchanger 21 is connected to the liquid-side shutoff valve 23 via the liquid-side connection pipe 14. A gas-side end of the indoor heat exchanger 21 is connected to the gas-side shutoff valve 24 via the gas-side connection pipe 13. The gas-side shutoff valve 24 is connected to a port D of the four-way switching valve 18 via the refrigerant pipe 56a and the refrigerant flow path 56b in the refrigerant flow path module 40.

The four-way switching valve 18 switches the flow path between a first mode (mode indicated by a solid line in FIG. 1) in which the port A and the port C communicate with each other and the port B and the port D communicate with each other and a second mode (mode indicated by a dotted line in FIG. 1) in which the port A and the port D communicate with each other and the port B and the port C communicate with each other. In the first mode, the refrigerant discharged from the compressor 15 flows to the outdoor heat exchanger 16, and in the second mode, the refrigerant discharged from the compressor 15 flows to the indoor heat exchanger 21.

The outdoor fan 19 is disposed near the outdoor heat exchanger 16. The outdoor fan 19 is rotationally driven by a motor and blows air to the outdoor heat exchanger 16. The refrigerant flowing inside the outdoor heat exchanger 16 exchanges heat with outdoor air sent by the outdoor fan 19, and evaporates or condenses.

The indoor fan 22 is disposed near the indoor heat exchanger 21. The indoor fan 22 is rotationally driven by a motor and blows air to the indoor heat exchanger 21. The refrigerant flowing inside the indoor heat exchanger 21 exchanges heat with indoor air sent by the indoor fan 22, and condenses or evaporates.

When executing a cooling operation, the air conditioner 10 switches the four-way switching valve 18 to the first mode, and when executing a heating operation, the air conditioner 10 switches the four-way switching valve 18 to the second mode. In the cooling operation, a gas refrigerant discharged from the compressor 15 flows through the four-way switching valve 18 into the outdoor heat exchanger 16 functioning as a condenser, and is condensed into a liquid refrigerant. This liquid refrigerant is decompressed by the expansion valve 17 to become a gas-liquid two-phase refrigerant, and flows into the indoor heat exchanger 21 functioning as an evaporator. The gas-liquid two-phase refrigerant exchanges heat with the air sent by the indoor fan 22 and is evaporated into a gas refrigerant. The air cooled by the heat exchange is supplied into the room. The gas refrigerant flowing out of the indoor heat exchanger 21 is sucked into the compressor 15 through the four-way switching valve 18.

In the heating operation, the gas refrigerant discharged from the compressor 15 flows through the four-way switching valve 18 into the indoor heat exchanger 21 functioning as a condenser. The gas refrigerant exchanges heat with the air sent by the indoor fan 22 and is condensed into a liquid refrigerant. The air heated by the heat exchange is supplied into the room. The liquid refrigerant flowing out of the indoor heat exchanger 21 is decompressed by the expansion valve 17 to become a gas-liquid two-phase refrigerant, and flows into the outdoor heat exchanger 16 functioning as an evaporator. The gas-liquid two-phase refrigerant is evaporated into a gas refrigerant in the outdoor heat exchanger 16. The gas refrigerant is sucked into the compressor 15 through the four-way switching valve 18.

### (Configuration of outdoor unit)

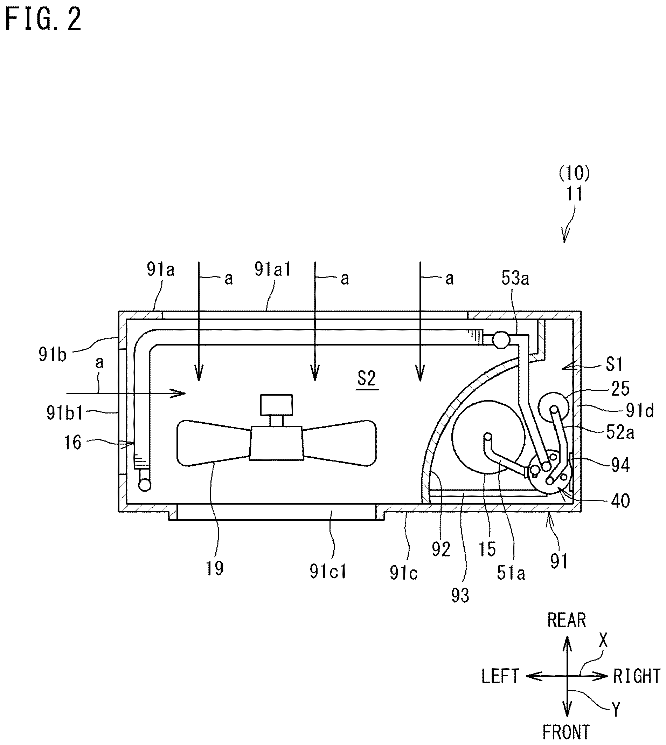

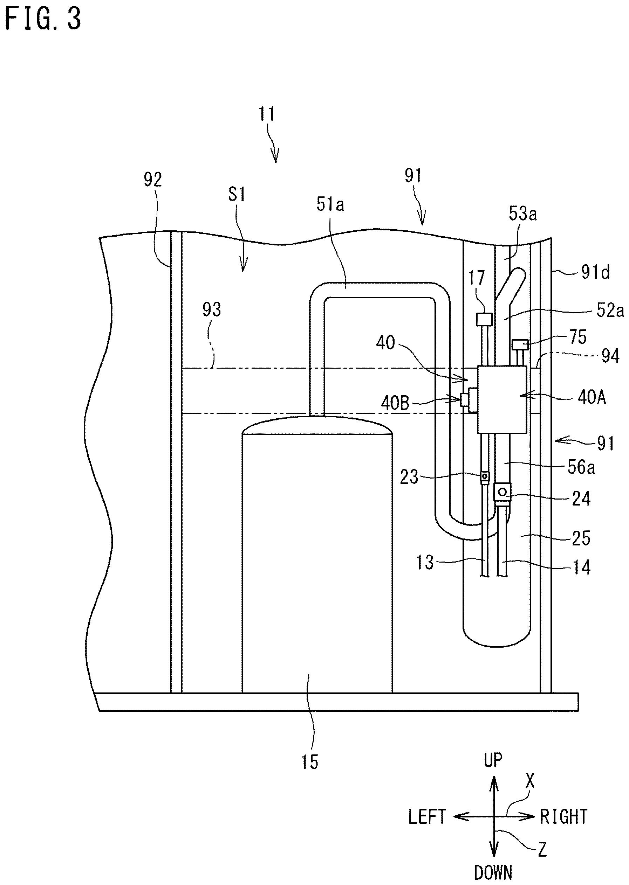

FIG. 2 is a plan view of an interior of the outdoor unit. FIG. 3 is a front view of a machine chamber of the outdoor unit.

In the following description, a direction (first direction X) indicated by an arrow X in FIGs. 2 and 3 is a left-right direction, a direction (second direction Y) indicated by an arrow Y is a front-rear direction, and a direction (third direction Z) indicated by an arrow Z is an up-down direction. However, these directions are merely examples and can be changed as appropriate.

The outdoor unit 11 includes a casing 91. The casing 91 has a rectangular parallelepiped shape and has a quadrilateral shape in plan view. The casing 91 has an interior provided with a partition wall 92 that partitions a machine chamber S1 and a heat exchange chamber S2. The machine chamber S1 accommodates the compressor 15. The machine chamber S1 accommodates, in addition to the compressor 15, the accumulator 25, the refrigerant flow path module 40, and the like.

The heat exchange chamber S2 of the casing 91 accommodates the outdoor heat exchanger 16, the outdoor fan 19, and the like. The outdoor heat exchanger 16 has an L shape in plan view. The outdoor heat exchanger 16 is disposed along two adjacent side walls (a rear side wall 91a and a left side wall 91b) of the casing 91 disposed in the heat exchange chamber S2. The side walls 91a and 91b are provided with air inlets 91a1 and 91b1, respectively. The outdoor fan 19 is disposed facing a side wall (front side wall) 91c adjacent to the side wall (left side wall) 91b provided with the air inlet 91b1. The side wall 91c is provided with an air blow-out port 91c1.

When the outdoor fan 19 operates, air is taken into the casing 91 from the air inlets 91a1 and 91b1 and exhausted from the air blow-out port 91c1. An arrow a shown in FIG. 2 indicates a flow direction of the air taken into the casing 91.

As shown in FIGs. 2 and 3, the refrigerant flow path module 40 is disposed in the machine chamber S1 in the casing 91 of the outdoor unit 11. Specifically, in the machine chamber S1, the refrigerant flow path module 40 is disposed near the side wall (front side wall) 91c and the side wall (right side wall) 91d adjacent to each other. In other words, the refrigerant flow path module 40 is disposed at a corner between the side walls 91c and 91d.

The refrigerant flow path module 40 is fixed to the casing 91 by attachment members 93 and 94. The attachment member 93 has, for example, a band plate shape, and has one end in a longitudinal direction fixed to the refrigerant flow path module 40 and the other end fixed to the partition wall 92 of the casing 91. The attachment member 94 has, for example, one end fixed to the side wall (right side wall) 91d of the casing 91 and the other end fixed to the refrigerant flow path module 40. Therefore, the refrigerant flow path module 40 is attached between the side wall 91d and the partition wall 92 of the casing 91 in the left-right direction X via the attachment members 93 and 94. The refrigerant flow path module 40 is disposed on the right side (one side in the first direction X) of the compressor 15 and on the front side (one side in the second direction Y) of the accumulator 25.

For example, the refrigerant pipes 51a, 52a, 53a, and 56a are connected to the refrigerant flow path module 40 according to the present embodiment. The other end of the refrigerant pipe (discharge pipe) 51a is connected to the discharge side of the compressor 15. The other end of the refrigerant pipe (suction pipe) 52a is connected to the accumulator 25. The other end of the refrigerant pipe 53a is connected to the outdoor heat exchanger 16. The other end of the refrigerant pipe 56a is connected to the shutoff valve 24.

### (Refrigerant flow path module)

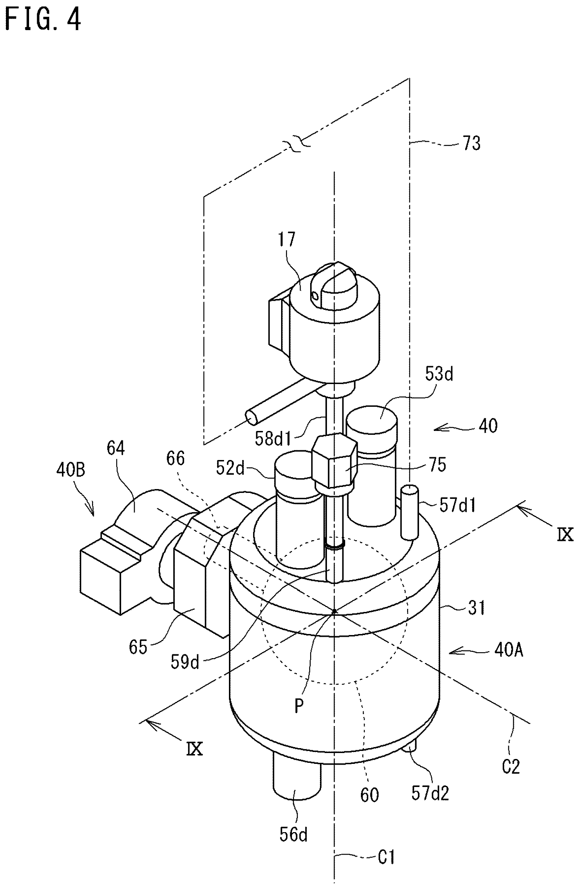

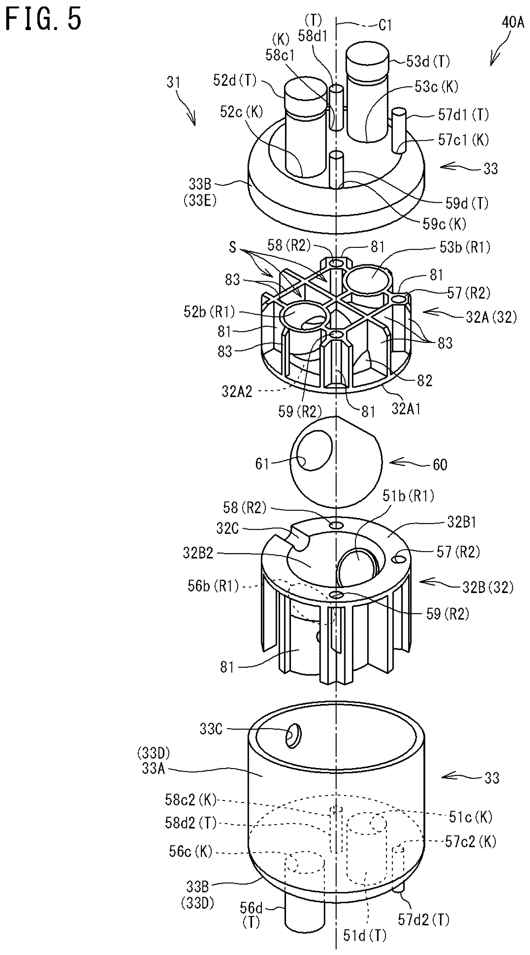

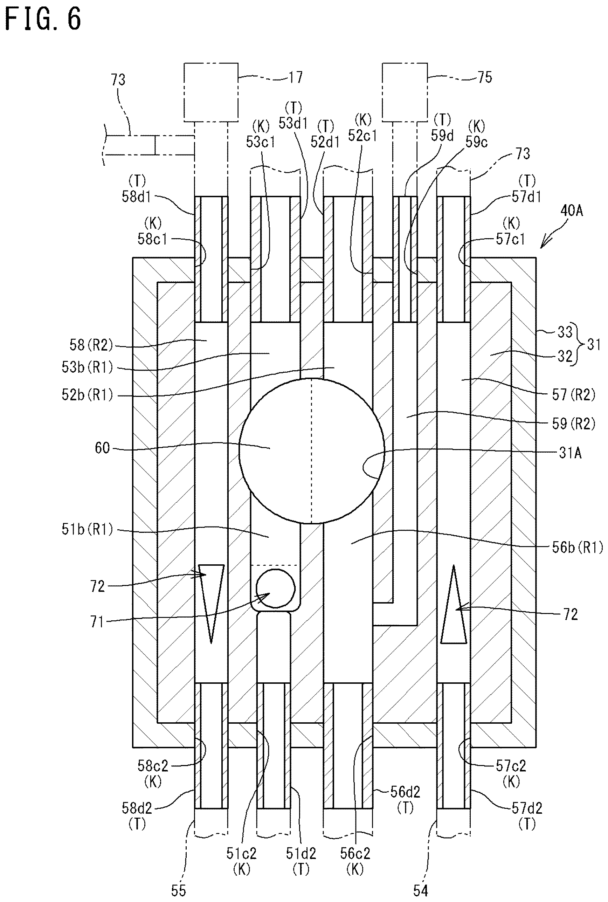

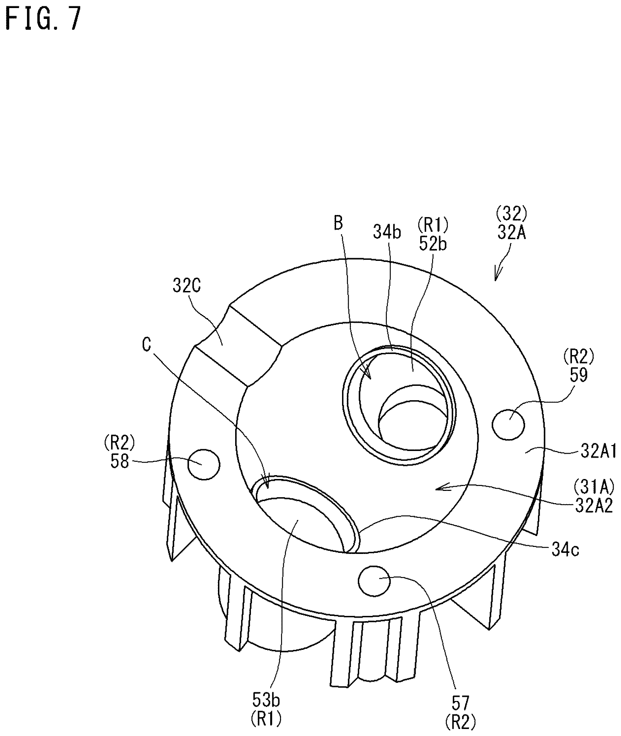

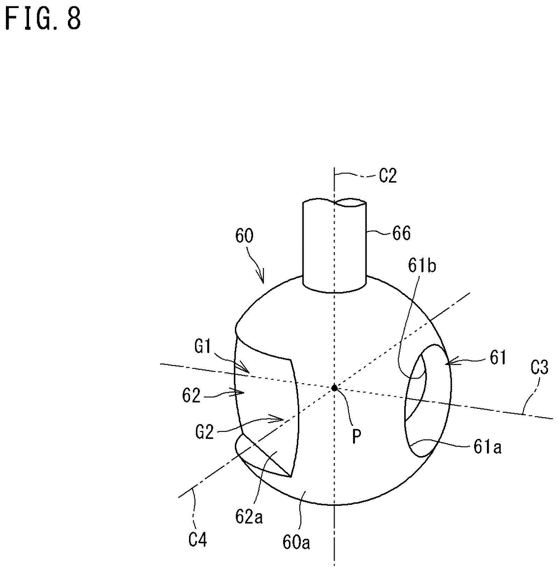

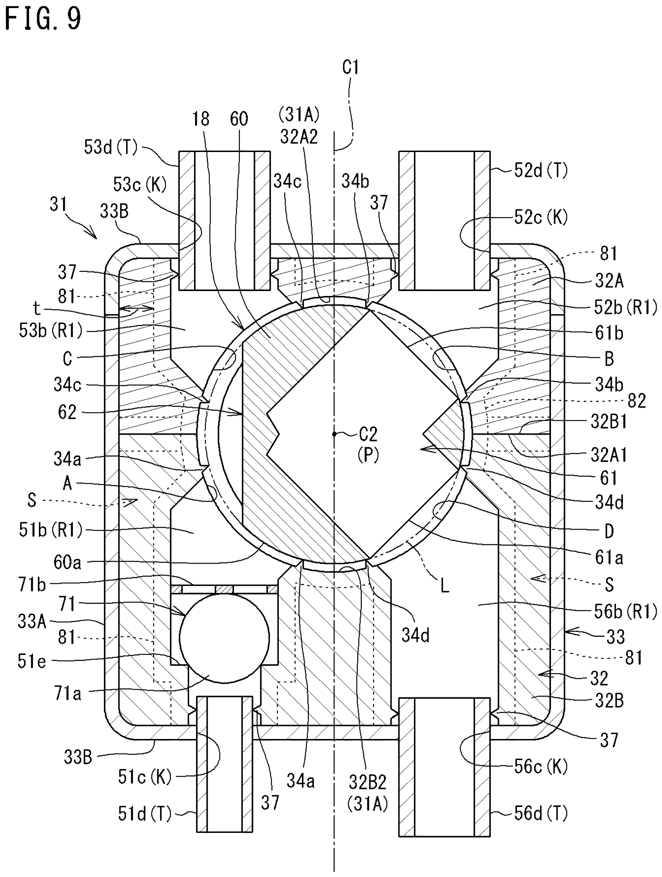

FIG. 4 is a perspective view of the refrigerant flow path module. FIG. 5 is an exploded perspective view of the refrigerant flow path module. FIG. 6 is a sectional view schematically showing a structure of the refrigerant flow path module. FIG. 7 is a perspective view of a flow path unit of the refrigerant flow path module. FIG. 8 is a perspective view of a valve body of the refrigerant flow path module. FIG. 9 is a sectional view of the refrigerant flow path module taken along line IX-IX in FIG. 4.

As shown in FIG. 4, the refrigerant flow path module 40 includes a module body 40A and a drive mechanism 40B. The module body 40A has a substantially cylindrical shape as a whole. A center axis C1 of the cylindrical shape of the module body 40A is oriented in the up-down direction. Therefore, the "up-down direction" in the following description of the module body 40A means a direction along the center axis C1. The drive mechanism 40B is provided on an outer peripheral surface of the module body 40A.

As also shown in FIGs. 5 and 6, the module body 40A includes a flow path body 31 and a valve body 60. The valve body 60 is a constituent element of the four-way switching valve (flow path switching valve) 18, and is accommodated inside the flow path body 31. Therefore, the flow path body 31 functions as a casing of the valve body 60. The flow path body 31 has a substantially cylindrical shape. The flow path body 31 includes a flow path unit 32 and a casing 33. In the flow path unit 32, the plurality of refrigerant flow paths 51b, 52b, 53b, 56b, 57,58, and 59, and a hollow portion 31A are formed. The valve body 60 is accommodated in the hollow portion 31A.

Of the plurality of refrigerant flow paths, one end of each of the refrigerant flow paths 51b, 52b, 53b, and 56b communicates with the hollow portion 31A, and the other end communicates with the outside of the flow path body 31. The other refrigerant flow paths 57 and 58 do not communicate with the hollow portion 31A and penetrate the flow path body 31. The other refrigerant flow path 59 has one end communicating with the refrigerant flow path 56b and the other end communicating with the outside of the flow path body 31.

In the present specification, any of the plurality of refrigerant flow paths may be referred to as a first refrigerant flow path, and any of the other refrigerant flow paths may be referred to as a second refrigerant flow path. In particular, in the present embodiment, the refrigerant flow paths 51b, 52b, 53b, and 56b communicating with the hollow portion 31A are referred to as first refrigerant flow paths, and are denoted by a common reference sign R1 generalized to these first refrigerant flow paths. In the present embodiment, the other refrigerant flow paths 57, 58, and 59 not communicating with the hollow portion 31A are referred to as second refrigerant flow paths, and are denoted by a common reference sign R2 generalized to these second refrigerant flow paths. Details of these refrigerant flow paths R1 and R2 will be described later.

As shown in FIG. 5, the flow path unit 32 according to the present embodiment includes a plurality of members (divided bodies) 32A and 32B. The flow path unit 32 is divided by a plane intersecting (orthogonal to) the center axis C1. Specifically, the flow path unit 32 is divided into two by a plane orthogonal to the center axis C1 at a position deviated to one side from a center in the up-down direction. Therefore, the flow path unit 32 includes the two divided bodies 32A and 32B.

In the present embodiment, a length of the lower divided body 32B in the up-down direction is smaller than a length of the upper divided body 32A in the up-down direction. However, the lengths of the upper and lower divided bodies 32A and 32B in the up-down direction may be the same, and the upper and lower divided bodies 32A and 32B may be configured by the same component. The flow path unit 32 may be configured by a plurality of divided bodies divided by a plane on the center axis C1 or a plane parallel to the center axis C1.

As shown in FIGs. 5 and 9, the two divided bodies 32A and 32B are combined in a state where one end surfaces 32A1 and 32B1 in the up-down direction face each other. Concave portions 32A2 and 32B2 having a hemispherical shape are formed on the one end surfaces 32A1 and 32B1 of each divided body 32A, and by combining the two concave portions 32A2 and 32B2, the hollow portion 31A having a spherical shape is formed. Therefore, the hollow portion 31A is formed slightly biased upward from the center in the up-down direction in the flow path unit 32.

As shown in FIGs. 5 and 9, the flow path unit 32 includes a plurality of cylindrical tube portions 81 and a spherical accommodating portion 82. The refrigerant flow paths R1 and R2 are formed inside each of the plurality of tube portions 81. The hollow portion 31A is formed inside the accommodating portion 82.

Furthermore, the flow path unit 32 has a plurality of ribs 83 protruding from an outer face of the tube portion 81 and the accommodating portion 82. The plurality of ribs 83 has a plate shape and has a plate surface along the up-down direction. The plurality of ribs 83 is disposed in a lattice pattern. An outer peripheral surface of the plurality of ribs 83 has a cylindrical shape as a whole along an inner surface of the casing 33 described later.

The flow path unit 32 according to the present embodiment includes the tube portion 81 and the accommodating portion 82 forming the refrigerant flow paths R1 and R2 and the hollow portion 31A, and the rib 83 protruding from the outer faces of the tube portion 81 and the accommodating portion 82, and a clearance S is formed between the adjacent rib 83 and rib 83. Therefore, the flow path unit 32 can be configured to be lightweight, and the material used can be reduced. The ribs 83 can support the tube portion 81 against pressure from the refrigerant flowing through the refrigerant flow paths R1 and R2.

The flow path unit 32 is formed with, for example, a synthetic resin. The flow path unit 32 is formed by molding with a metal die (die molding) such as injection molding. As a material of the flow path unit 32, PA66 (polyamide 66), PPS (polyphenylene sulfide), PBT (polybutylene terephthalate), or the like can be adopted. However, the flow path unit 32 may be formed with a material containing aluminum as a main component, for example, aluminum alloy or pure aluminum, or may be formed by die casting.

As shown in FIGs. 5 and 6, the casing 33 covers the outside of the flow path unit 32. The casing 33 has a substantially cylindrical shape. As shown in FIG. 5, the casing 33 has a cylindrical barrel portion 33A and end portions 33B disposed at both ends of the barrel portion 33A in an axial direction. The barrel portion 33A and one (lower side in the example of FIG. 5) end portion 33B are integrally formed. Therefore, the casing 33 includes two constituent members 33D and 33E, that is, a constituent member 33D including the barrel portion 33A and the one end portion 33B and a constituent member 33E including the other end portion 33B.

The casing 33 is formed with a steel material. For example, the casing 33 is formed with stainless steel. Each of the constituent members 33D and 33E of the casing 33 is formed by metal working such as sheet metal working or press working. For example, each of the constituent members 33D and 33E is formed by drawing. However, a material and a manufacturing method of the casing 33 are not limited to those described above. For example, the casing 33 may be formed with another steel material such as iron.

The two constituent members 33D and 33E of the casing 33 are joined by welding. Specifically, the two constituent members 33D and 33E of the casing 33 are joined by welding that involves melting of a base material. The two constituent members 33D and 33E are closely joined so that the refrigerant does not leak from between the constituent members. The casing 33 protects the flow path unit 32 by covering the outside of the flow path unit 32. The casing 33 compensates pressure resistance of the flow path unit 32 against pressure applied from the refrigerant in the refrigerant flow paths R1 and R2 of the flow path unit 32 or the refrigerant in the hollow portion 31A. The casing 33 prevents the refrigerant leaking from the flow path unit 32 from leaking to the outside.

As described above, the valve body 60 of the four-way switching valve 18 is accommodated in the flow path body 31. Therefore, the flow path body 31 also functions as a casing of the valve body 60 in the four-way switching valve 18. Specifically, the flow path unit 32 of the flow path body 31 functions as an inner casing of the valve body 60, and the casing 33 functions as an outer casing of the valve body 60.

### (Four-way switching valve (switching mechanism) 18)

As shown in FIG. 9, the hollow portion 31A (accommodating portion 82) accommodating the valve body 60 of the four-way switching valve 18 has a spherical shape. A plurality of ports (openings) A, B, C, and D is formed on an inner surface of the hollow portion 31A. These ports A to D correspond to the ports A to D described with reference to FIG. 1. The two ports B and C are disposed above the hollow portion 31A, and the two ports A and D are disposed below the hollow portion 31A.

In the flow path body 31, the refrigerant flow path R1(51b, 52b, 53b, and 56b) communicating with each of the ports A to D is formed.

The refrigerant flow path 51b communicating with the port A extends substantially downward from the port A. A lower end of the refrigerant flow path 51b communicates with an opening 51c formed in a lower surface of the casing 33. The flow path body 31 has a coupling pipe 51d inserted into the opening 51c and attached to the casing 33. An end portion (upper end portion) of the coupling pipe 51d is also inserted into the refrigerant flow path 51b.

The refrigerant flow path 51b has a stepped portion 51e in the middle of the refrigerant flow path 51b. An inner diameter of the refrigerant flow path 51b above the stepped portion 51e (closer to the valve body 60) is larger than an inner diameter of the refrigerant flow path 51b below the stepped portion 51e (closer to the coupling pipe 51d). The check valve 71 is accommodated in the refrigerant flow path 51b above the stepped portion 51e. The check valve 71 is a non-electric component incorporated in the refrigerant flow path 51b. The check valve 71 includes a spherical valve body 71a and a pressing member 71b that covers the valve body 71a from above and restricts an upward movement of the valve body 71a. The valve body 71a comes into contact with the stepped portion 51e to restrict a flow of the refrigerant from up to down (from the valve body 60 toward the coupling pipe 51d) and allow a flow of the refrigerant in an opposite direction. A specific structure of the check valve 71 is not limited, and a known structure can be adopted.

The refrigerant flow path 52b communicating with the port B extends substantially upward from the port B. An upper end of the refrigerant flow path 52b communicates with an opening 52c formed in an upper surface of the casing 33. The flow path body 31 has a coupling pipe 52d inserted into the opening 52c and attached to the casing 33. An end portion (lower end portion) of the coupling pipe 52d is also inserted into the refrigerant flow path 52b.

The refrigerant flow path 53b communicating with the port C extends substantially upward from the port C. An upper end of the refrigerant flow path 53b communicates with an opening 53c formed in an upper surface of the casing 33. The flow path body 31 has a coupling pipe 53d inserted into the opening 53c and attached to the casing 33. An end portion (lower end portion) of the coupling pipe 53d is also inserted into the refrigerant flow path 53b.

The refrigerant flow path 56b communicating with the port D extends substantially downward from the port D. A lower end of the refrigerant flow path 56b communicates with an opening 56c formed in the lower surface of the casing 33. The flow path body 31 has a coupling pipe 56d attached to the opening 56c. An end portion (upper end portion) of the coupling pipe 56d is also inserted into the refrigerant flow path 56b.

In the following description, coupling pipes attached to the casing 33, such as the coupling pipes 51d, 52d, 53d, and 56d described above and coupling pipes 57d1, 57d2, 58d1, and 58d2 described later, may be denoted by a common general reference sign T. Similarly, openings 51c, 52c, 53c, 56c, 57c1, 57c2, 58c1, and 58c2 formed in the casing 33 may be denoted by a generalized common reference sign K.

As shown in FIG. 9, the valve body 60 is disposed in the hollow portion 31A of the flow path body 31. The valve body 60 has a spherical shape as shown in FIG. 8. An outer diameter of the valve body 60 is formed to be slightly smaller than an inner diameter of the inner surface of the hollow portion 31A.

The valve body 60 is made of synthetic resin or metal. The valve body 60 is molded with a die by injection molding or die casting, for example. As a material of the valve body 60, for example, a synthetic resin such as PA66 (polyamide 66) or PPS (polyphenylene sulfide), an aluminum alloy, a material containing aluminum as a main component such as pure aluminum, or a steel material such as SUJ2 (high carbon chromium bearing steel) is adopted. However, the material and manufacturing method of the valve body 60 are not limited to the above.

As shown in FIG. 8, the valve body 60 rotates about a predetermined axis C2. The axis C2 of the valve body 60 passes through a center P of the spherical shape of the valve body 60. The axis C2 is set at a constant position, and the valve body 60 rotates at a constant position. A drive shaft 66 is disposed on the axis C2. As shown in FIG. 4, the drive shaft 66 constitutes the drive mechanism 40B. The drive shaft 66 is disposed on the axis C2, and has one end fixed to the valve body 60. The other end of the drive shaft 66 protrudes from an outer peripheral surface of the flow path body 31 of the module body 40A and is connected to a decelerator 65 and a drive unit 64. The drive shaft 66 according to the present embodiment is disposed in a horizontal direction orthogonal to the center axis C1 of the module body 40A. The decelerator 65 and the drive unit 64 also constitute the drive mechanism 40B. Insertion holes 32C and 33C into which the drive shaft 66 is inserted are formed in the flow path unit 32 and the casing 33 constituting the flow path body 31 (see FIGs. 5 and 7).

The drive unit 64 is an electric motor, for example. The drive unit 64 generates and outputs rotational power. As the drive unit 64, an electric motor capable of adjusting a rotational angle, such as a stepping motor, is employed. The decelerator 65 decelerates the rotational power of the drive unit 64 and transmits the rotational power to the drive shaft 66. The decelerator 65 includes, for example, a plurality of deceleration gears.

### (Specific configuration of valve body 60)

FIG. 8 shows a reference axis C3 orthogonal to the axis C2 of the valve body 60 and a reference axis C4 orthogonal to the axis C2 and the reference axis C3. The axis C2, the reference axis C3, and the reference axis C4 are orthogonal to each other at the center P of the spherical shape of the valve body 60.

A through hole 61 and a concave portion 62 are formed in the valve body 60. The through hole 61 and the concave portion 62 both constitute a passage for the refrigerant. The through hole 61 is a hole penetrating the valve body 60. On the other hand, the concave portion 62 has a shape in which an outer surface 60a of the valve body 60 is recessed.

The through hole 61 opens at two positions on the outer surface 60a of the valve body 60. One opening 61a of the through hole 61 is formed on the reference axis C3. The other opening 61b is formed on the reference axis C4. Therefore, as shown in FIG. 9, the through hole 61 has a shape bent in a substantially L shape. The areas of both the openings 61a and 61b are the same. A sectional area of the through hole 61 (an area of a cross section orthogonal to a center line of the through hole 61; a cross-sectional area) is substantially the same as the area of each of the openings 61a and 61b.

The concave portion 62 is formed in a range (range of about 90° around the axis C2) extending between a position G1 disposed on an opposite side of one opening 61a of the through hole 61 on the reference axis C3 and a position G2 disposed on an opposite side of the other opening 61b of the through hole 61 on the reference axis C4 on the outer surface 60a of the valve body 60.

A bottom surface 62a of the concave portion 62 is one flat surface. The bottom surface 62a is formed across the position G1 and the position G2. The bottom surface 62a may be constituted by a plurality of flat surfaces or may be constituted by curved surfaces. The bottom surface 62a of the concave portion 62 and the openings 61a and 61b of the through hole 61 are arranged at an angle of about 45°.

The valve body 60 is not a complete sphere due to the formation of the through hole 61 and the concave portion 62, and is a sphere in which a part of the spherical surface (outer surface 60a) is missing. In FIG. 9, the shape of a complete sphere without a missing part is indicated by an imaginary line L.

### (Switching of flow path by valve body 60)

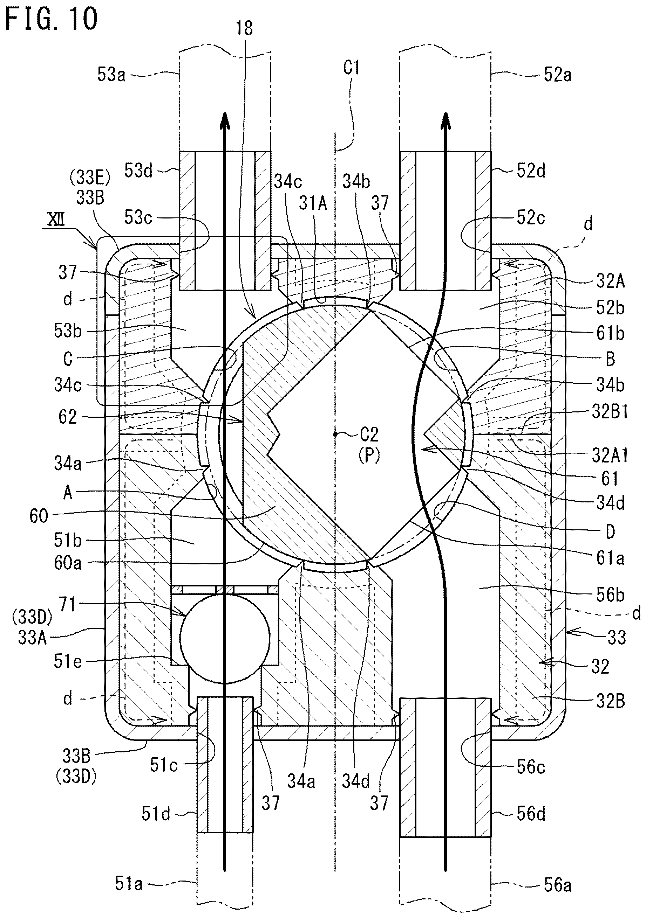

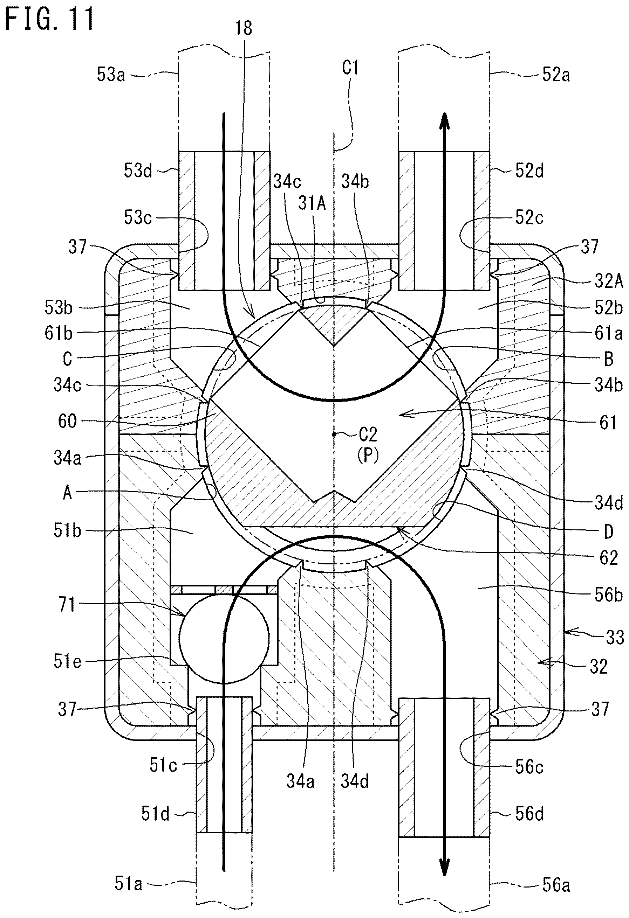

FIG. 10 is a sectional view describing an action of the refrigerant flow path module in the first mode. FIG. 11 is a sectional view describing an action of the refrigerant flow path module in the second mode.

In the present embodiment, the valve body 60 is switched between the first mode (see FIG. 10) and the second mode (see FIG. 11) by rotating 90 degrees about the axis C2.

In the first mode shown in FIG. 10, the port B and the port D are connected by the through hole 61 of the valve body 60, and the port A and the port C are connected by the concave portion 62. Therefore, as indicated by solid arrows in FIG. 1, the refrigerant discharged from the compressor 15 flows into the four-way switching valve 18 from the port A through the refrigerant pipe 51a and the refrigerant flow path 51b, flows out of the four-way switching valve 18 from the port C through the concave portion 62 (see FIG. 10) of the valve body 60, and is supplied to the outdoor heat exchanger 16 through the refrigerant flow path 53b and the refrigerant pipe 53a. The refrigerant flowing out of the indoor heat exchanger 21 flows into the four-way switching valve 18 from the port D through the connection pipe 13, the refrigerant pipe 56a, and the refrigerant flow path 56b, flows out of the four-way switching valve 18 from the port B through the through hole 61 (see FIG. 10) of the valve body 60, and is sucked into the compressor 15 through the refrigerant flow path 52b and the refrigerant pipe 52a. Thus, the air conditioner 10 can execute the cooling operation.

In the second mode shown in FIG. 11, the port B and the port C are connected by the through hole 61 of the valve body 60, and the port A and the port D are connected by the concave portion 62. Therefore, as indicated by dotted arrows in FIG. 1, the refrigerant discharged from the compressor 15 flows into the four-way switching valve 18 from the port A through the refrigerant pipe 51a and the refrigerant flow path 51b, flows out of the four-way switching valve 18 from the port D through the concave portion 62 (see FIG. 11) of the valve body 60, and is supplied to the indoor heat exchanger 21 through the refrigerant flow path 56b, the refrigerant pipe 56a, and the connection pipe 13. The refrigerant flowing out of the outdoor heat exchanger 16 flows into the four-way switching valve 18 from the port C through the refrigerant pipe 53a and the refrigerant flow path 53b, flows out of the four-way switching valve 18 from the port B through the through hole 61 (see FIG. 11) of the valve body 60, and is sucked into the compressor 15 through the refrigerant flow path 52b and the refrigerant pipe 52a. Thus, the air conditioner 10 can execute the heating operation.

The through hole 61 of the valve body 60 always communicates with the port B, and selectively communicates with the port D and the port C by the valve body 60 rotating by 90° about the axis C2. Since the port B is connected to the suction pipe 52a and the refrigerant flow path 52b of the compressor 15, the through hole 61 always communicating with the port B serves as a passage through which a "low-pressure refrigerant" flows.

The concave portion 62 always communicates with the port A, and selectively communicates with the port C and the port D by the valve body 60 rotating by 90° about the axis C2. Since the port A is connected to the discharge pipe 51a and the refrigerant flow path 51b of the compressor 15, the concave portion 62 always communicating with the port A serves as a passage through which a "high-pressure refrigerant" flows.

As shown in FIGs. 7, 10, and 11, seal portions 34a, 34b, 34c, and 34d are integrally formed on the inner surface of the hollow portion 31A of the flow path body 31 and around the ports A to D, respectively. For example, the seal portions 34a to 34d are formed integrally with the flow path unit 32 when the flow path unit 32 is molded with a die by injection molding, die casting, or the like. The seal portions 34a to 34d are annular protrusions protruding from the inner surface of the hollow portion 31A. Distal ends of the seal portions 34a to 34d are in contact with the outer surface 60a of the valve body 60. The seal portions 34a to 34d according to the present embodiment have a circular annular shape substantially along the peripheries of the cylindrical refrigerant flow paths 51b, 52b, 53b, and 56b. However, the seal portions 34a to 34d may have an annular shape such as a square shape.

Specifically, in the first mode shown in FIG. 10, the seal portion 34b formed around the port B on the inner surface of the hollow portion 31A is in contact with the periphery of the opening 61b of the through hole 61 on the outer surface 60a of the valve body 60. The seal portion 34d formed around the port D on the inner surface of the hollow portion 31A is in contact with the periphery of the opening 61a of the through hole 61 on the outer surface 60a of the valve body 60.

Therefore, the seal portions 34b and 34d can suppress leakage of the low-pressure refrigerant flowing through the port B, the port D, and the through hole 61 into a gap between the outer surface 60a of the valve body 60 and the inner surface of the hollow portion 31A. Furthermore, the seal portions 34b and 34d can prevent the refrigerant (high-pressure refrigerant) flowing through portions other than the port B, the port D, and the through hole 61 from flowing into the port B, the port D, and the through hole 61. Accordingly, mixing of the low-pressure refrigerant and the high-pressure refrigerant can be suppressed.

On the other hand, the seal portions 34a and 34c formed around the port A and the port C on the inner surface of the hollow portion 31A are partially in contact with the periphery of the concave portion 62 on the outer surface 60a of the valve body 60, but the other portions are positioned on a radially outer side of the concave portion 62 and are not in contact with the outer surface 60a of the valve body 60. Therefore, the high-pressure refrigerant leaks through the port A, the port C, and the concave portion 62 into the gap between the outer surface 60a of the valve body 60 and the inner surface of the hollow portion 31A.

When the high-pressure refrigerant leaks into the gap between the outer surface 60a of the valve body 60 and the inner surface of the hollow portion 31A, the pressure of the high-pressure refrigerant is applied to most part of the outer surface 60a of the valve body 60 except for the through hole 61. The pressure of the high-pressure refrigerant is also applied to the inside of the concave portion 62 through which the high-pressure refrigerant passes. Therefore, the outer surface 60a of the valve body 60 is strongly pressed against the seal portions 34b and 34d formed around the port B and the port D.

Accordingly, the seal portions 34b and 34d can further suppress leakage of the low-pressure refrigerant flowing through the port B, the port D, and the through hole 61 into a gap between the outer surface 60a of the valve body 60 and the inner surface of the hollow portion 31A. Furthermore, the seal portions 34b and 34d can further suppress the inflow of the high-pressure refrigerant flowing through portions other than the port B, the port D, and the through hole 61, in other words, the high-pressure refrigerant flowing through the port A, the port C, and the concave portion 62, and the high-pressure refrigerant leaking from these portions into the port B, the port D, and the through hole 61.

In the second mode shown in FIG. 11, the seal portion 34b formed around the port B on the inner surface of the hollow portion 31A is in contact with the periphery of the opening 61a of the through hole 61 on the outer surface 60a of the valve body 60. The seal portion 34c formed around the port C on the inner surface of the hollow portion 31A is in contact with the periphery of the opening 61b of the through hole 61 on the outer surface 60a of the valve body 60.

Therefore, the seal portions 34b and 34c can suppress leakage of the low-pressure refrigerant flowing through the port B, the port C, and the through hole 61 into a gap between the outer surface 60a of the valve body 60 and the inner surface of the hollow portion 31A. Furthermore, the seal portions 34b and 34c can prevent the refrigerant (high-pressure refrigerant) flowing through portions other than the port B, the port C, and the through hole 61 from flowing into the port B, the port C, and the through hole 61. Accordingly, mixing of the low-pressure refrigerant and the high-pressure refrigerant can be suppressed.

On the other hand, the seal portions 34a and 34d formed around the port A and the port D on the inner surface of the hollow portion 31A are partially in contact with the periphery of the concave portion 62 on the outer surface 60a of the valve body 60, but the other portions are positioned on a radially outer side of the concave portion 62 and are not in contact with the outer surface 60a of the valve body 60. Therefore, the refrigerant flowing through the port A, the port D, and the concave portion 62 leaks into the gap between the outer surface 60a of the valve body 60 and the inner surface of the hollow portion 31A.

When the high-pressure refrigerant leaks into the gap between the outer surface 60a of the valve body 60 and the inner surface of the hollow portion 31A, the pressure of the high-pressure refrigerant is applied to most part of the outer surface 60a of the valve body 60 except for the through hole 61 and to the inside of the concave portion 62 through which the high-pressure refrigerant passes. Therefore, the valve body 60 is strongly pressed against the seal portions 34b and 34c formed around the port B and the port C.

Accordingly, the seal portions 34b and 34c can further suppress leakage of the low-pressure refrigerant flowing through the port B, the port C, and the through hole 61 into a gap between the outer surface 60a of the valve body 60 and the inner surface of the hollow portion 31A. Furthermore, the seal portions 34b and 34c can further suppress the inflow of the high-pressure refrigerant flowing through portions other than the port B, the port C, and the through hole 61, in other words, the high-pressure refrigerant flowing through the port A, the port D, and the concave portion 62, and the high-pressure refrigerant leaking from these portions into the port B, the port C, and the through hole 61.

The seal portions 34a to 34d are formed integrally with the flow path unit 32. Therefore, the number of components can be reduced as compared with a case where the seal portions 34a to 34d are formed separately from the flow path unit 32. In a case where the flow path unit 32 is molded with a metal die with a synthetic resin or the like, the seal portions 34a to 34d can be easily integrally molded.

Since only the high-pressure refrigerant flows through the port A of the four ports A to D, the seal portion 34a formed around the port A is substantially not used. Therefore, the seal portion 34a can be omitted.

As shown in FIG. 5, the two divided bodies 32A and 32B constituting the flow path unit 32 are only butted against each other at the end surfaces 32A1 and 32B1, but are not bonded to each other. Therefore, as indicated by an arrow d in FIG. 10, the high-pressure refrigerant leaks from between both of the end surfaces 32A1 and 32B1 to the outside of the flow path unit 32. The leaking high-pressure refrigerant flows into between the outer face of the flow path unit 32 and the inner surface of the casing 33, for example, flows into the clearance S between the rib 83 and the rib 83 of the flow path unit 32. In the casing 33, since the plurality of constituent members 33D and 33E are tightly joined by welding, leakage from between these constituent members 33D and 33E to the outside of the casing 33 is suppressed.

As shown in FIG. 9, coupling pipe T(51d, 52d, 53d, and 56d) inserted into the refrigerant flow path R1(51b, 52b, 53b, and 56b) is inserted into the opening K (51c, 52c, 53c, and 56c) formed at the end portion 33B of the casing 33, and is joined and fixed to the casing 33 by welding at a peripheral edge of the opening K. Specifically, the coupling pipe T is joined to the casing 33 by brazing, which is a type of welding that does not involve melting of the base material. Therefore, leakage of the refrigerant from between an outer peripheral surface of the coupling pipe T and the opening K of the casing 33 to the outside of the casing 33 is suppressed.

The end portion of the coupling pipe T is inserted into the refrigerant flow path R1 in the flow path unit 32. In the present embodiment, the seal portion 37 is provided between the outer peripheral surface of the coupling pipe T and the refrigerant flow path R1. The seal portion 37 is annularly formed along a circumferential direction on an inner peripheral surface of the refrigerant flow path R1. The seal portion 37 is integrally formed on the inner peripheral surface of the refrigerant flow path R1.

Therefore, the refrigerant leaking from the end surfaces 32A1 and 32B1 of the flow path unit 32 and flowing between the outer face of the flow path unit 32 and the inner surface of the casing 33 as indicated by the arrow d (see FIG. 10) is prevented from passing between the refrigerant flow path R1 and the coupling pipe T and entering the hollow portion 31A. The seal portion 37 can be integrally molded when the flow path unit 32 is molded with a metal die, similarly to the seal portions 34a to 34d formed on the inner surface of the hollow portion 31A.

### (Other refrigerant flow paths)

As shown in FIG. 6, the refrigerant flow path R2 (57, 58, and 59) that does not communicate with the hollow portion 31A is formed in the flow path unit 32 of the refrigerant flow path module 40. Both of the refrigerant flow paths 57 and 58 extend in the up-down direction between an upper end and a lower end of the flow path unit 32, and penetrate the flow path unit 32.

An upper end and a lower end of the refrigerant flow path 57 communicate with the openings 57c1 and 57c2 formed in the upper surface and the lower surface of the casing 33, respectively. The coupling pipes 57d1 and 57d2 are inserted into the openings 57c1 and 57c2. For example, the coupling pipes 57d1 and 57d2 are joined and fixed to the casing 33 by welding at the peripheral edges of the openings 57c1 and 57c2. Specifically, the coupling pipes 57d1 and 57d2 are joined to the casing 33 by brazing, which is a type of welding that does not involve melting of the base material. The end portions of the coupling pipes 57d1 and 57d2 are also inserted into the refrigerant flow path 57.

An upper end and a lower end of the refrigerant flow path 58 communicate with the openings 58c1 and 58c2 formed in the upper surface and the lower surface of the casing 33, respectively. The coupling pipes 58d1 and 58d2 are inserted into the openings 58c1 and 58c2. For example, the coupling pipes 58d1 and 58d2 are joined and fixed to the casing 33 by welding at the peripheral edges of the openings 58c1 and 58c2. Specifically, the coupling pipes 58d1 and 58d2 are joined to the casing 33 by brazing, which is a type of welding that does not involve melting of the base material. The end portions of the coupling pipes 58d1 and 58d2 are also inserted into the refrigerant flow path 58.

Although not shown, a seal portion similar to the seal portion 37 shown in FIG. 9 is integrally formed on the inner peripheral surfaces of the refrigerant flow paths 57 and 58, and the seal portion is in contact with the outer peripheral surfaces of the coupling pipes 57d1, 57d2, 58d1, and 58d2 to suppress leakage of the refrigerant from between the inner peripheral surfaces of the refrigerant flow paths 57 and 58 and the outer peripheral surfaces of the coupling pipes 57d1, 57d2, 58d1, and 58d2.

As shown in FIG. 6, the strainers 72 are inserted into the refrigerant flow paths 57 and 58. The strainers 72 are non-electric components incorporated in the refrigerant flow paths 57 and 58. As also shown in FIGs. 1 and 4, one end of the refrigerant pipe 73 is connected to one coupling pipe 57d1 of the refrigerant flow path 57, and the other end of the refrigerant pipe 73 is connected to one end of the expansion valve 17. The refrigerant pipe 54 (see FIG. 1) connected to the liquid-side end of the outdoor heat exchanger 16 is connected to the other coupling pipe 57d2 of the refrigerant flow path 57.

The other end of the expansion valve 17 is connected to one coupling pipe 58d1 of the refrigerant flow path 58. The refrigerant pipe 55 (see FIG. 1) connected to the liquid-side shutoff valve 23 is connected to the other coupling pipe 58d2 of the refrigerant flow path 58.

As shown in FIG. 6, the other refrigerant flow path 59 not communicating with the hollow portion 31A of the flow path unit 32 extends in the up-down direction between the upper end of the flow path unit 32 and the refrigerant flow path 56b. An upper end of the refrigerant flow path 59 communicates with an opening 59c formed in the upper surface and the lower surface of the casing 33. A coupling pipe 59d is inserted into the opening 59c. For example, the coupling pipe 59d is joined and fixed to the casing 33 by welding at a peripheral edge of the opening 59c. Specifically, the coupling pipe 59d is joined to the casing 33 by brazing, which is a type of welding that does not involve melting of the base material. The end portion of the coupling pipe 59d is also inserted into the refrigerant flow path 59. A service port 75 is connected to the coupling pipe 59d. An instrument such as a pressure gauge, a vacuum pump, or the like can be connected to the service port 75.

In the present embodiment, each coupling pipe T described above is formed with a material containing copper as a main component, such as a copper alloy or pure copper. However, the material of the coupling pipe T is not limited thereto, and the coupling pipe T may be formed with a material containing aluminum as a main component or another material such as stainless steel.

### (Method for manufacturing refrigerant flow path module 40)

The refrigerant flow path module 40 is assembled as follows.

As shown in FIG. 5, first, the coupling pipe T is inserted into the opening K formed in each of the constituent members 33D and 33E of the casing 33, and the coupling pipe T is joined to the casing 33 by brazing. In the present embodiment, the casing 33 is made of stainless steel, the coupling pipe T is made of copper, and both are made of different materials. Therefore, the casing 33 and each coupling pipe T are joined by furnace brazing. By performing furnace brazing in this manner, even when different materials are used, brazing can be performed without using flux, and it is also possible to suppress sensitization of stainless steel.

Next, the various components 60, 71, and 72 are housed inside the flow path unit 32. Specifically, the valve body 60 is housed in the hollow portion 31A between the two divided bodies 32A and 32B, the strainers 72 are housed in the refrigerant flow paths 57 and 58, and the check valve 71 is housed in the refrigerant flow path 51b. In this state, the end surfaces 32A1 and 32B1 of the two divided bodies 32A and 32B are butted against each other. Thereafter, the flow path unit 32 is inserted into one constituent member 33D of the casing 33, and the flow path unit 32 is completely covered with the other constituent member 33E. At this time, the end portions of the coupling pipes T protruding inside the casing 33 are inserted into the corresponding refrigerant flow paths R1 and R2.

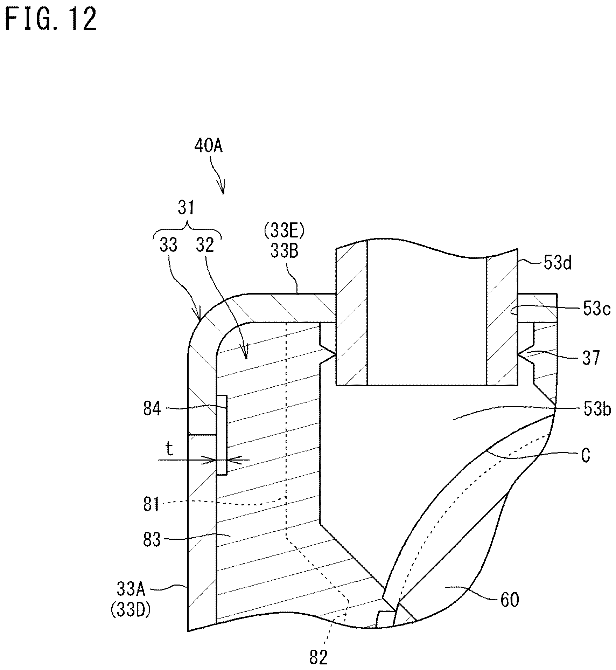

Thereafter, the constituent member 33D and the constituent member 33E of the casing 33 are joined by welding. The flow path unit 32 is in contact with the inner surface of the casing 33 on the outer peripheral surface of the rib 83, but is disposed away from the inner surface of the casing 33 with a gap t (see FIG. 9) in most of the other parts, that is, in the tube portion 81 and the accommodating portion 82. Therefore, it is possible to suppress transmission of heat to the flow path unit 32 when the constituent member 33D and the constituent member 33E of the casing 33 are joined by welding. As shown in FIG. 12, a groove 84 that forms the gap t with a joint between the constituent member 33D and the constituent member 33E may be formed on the outer peripheral surface of the rib 83 of the flow path unit 32. The gap t can be set in accordance with a constituent material of the flow path unit 32, and is preferably 5 mm or more, for example.

Thereafter, as shown in FIG. 5, the drive shaft 66 (see FIG. 4) of the drive mechanism 40B is inserted into the holes 33C and 32C formed in the casing 33 and the flow path unit 32 to be linked to the valve body 60, and the decelerator 65 and the drive unit 64 are attached to the drive shaft 66. A seal is provided between the drive shaft 66 and the casing 33 to prevent leakage of the refrigerant.

In the above assembling method, the coupling pipe T is attached to the casing 33 by brazing before the flow path unit 32 is accommodated in the casing 33. Therefore, it is possible to suppress heat when the coupling pipe T is attached to the casing 33 from being transmitted to the flow path unit 32.

A step of bonding the two divided bodies 32A and 32B constituting the flow path unit 32 by welding or the like is unnecessary. This configuration facilitates an assembling operation of the refrigerant flow path module 40. The seal between the outer surface 60a of the valve body 60 and the inner surface of the hollow portion 31A can be performed by the seal portions 34b to 34d only by accommodating the valve body 60 in the hollow portion 31A of the flow path unit 32. Similarly, the seal between the coupling pipe and the refrigerant flow path can be performed by the seal portion 37 only by inserting the coupling pipe fixed to the casing 33 into the refrigerant flow path. This configuration also facilitates an assembling operation of the refrigerant flow path module 40.

### [Second embodiment]

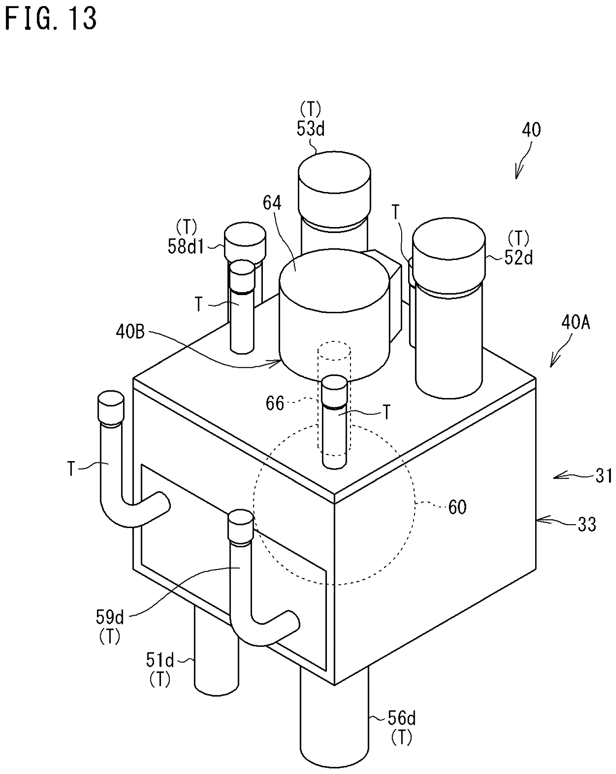

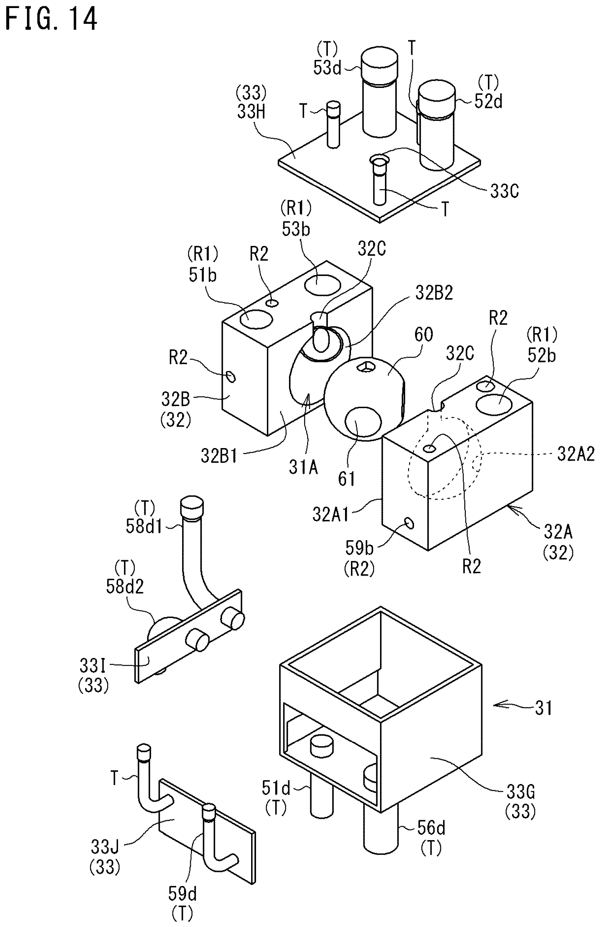

FIG. 13 is a perspective view of a refrigerant flow path module according to a second embodiment of the present disclosure. FIG. 14 is an exploded perspective view of the refrigerant flow path module.

In the present embodiment, the refrigerant flow path module 40 includes the module body 40A and the drive mechanism 40B. The module body 40A has a substantially rectangular parallelepiped shape. The flow path unit 32 and the casing 33 of the module body 40A also have a substantially rectangular parallelepiped shape. In the flow path unit 32, the plurality of refrigerant flow paths 52b, 53b, and 51b, and the hollow portion 31A are formed. The plurality of coupling pipes 51d, 52d, 53d, 56d, and 59d is connected to the upper surface, the lower surface, and the side surfaces of the casing 33. In FIGs. 13 and 14, the refrigerant flow paths and the coupling pipes having the same functions as those of the first embodiment are denoted by the same reference signs as those of the first embodiment, and the other refrigerant flow paths and the coupling pipes are denoted by the same generalized reference signs R1, R2, and T, respectively.

As shown in FIG. 14, the flow path unit 32 includes a plurality of (two) members (divided bodies) 32A and 32B. The concave portions 32A2 and 32B2 forming the hollow portion 31A are formed on the surfaces 32A1 and 32B1 facing each other of the two divided bodies 32A and 32B, respectively. The casing 33 also includes a plurality of constituent members 33G, 33 H, 33I, and 33 J. The coupling pipes T(51d, 52, 53d, 56d, and 59d) are joined to the constituent members 33G to 33J, respectively. In other words, the casing 33 is divided for each portion to which the coupling pipe T is joined.

The constituent members 33G to 33 J include the constituent member 33H corresponding to the upper surface of the rectangular parallelepiped casing 33, constituent members 33I and 33J corresponding to a part of the side surface of the casing 33 to which the coupling pipe T is connected, and the constituent member 33G corresponding to a part other than the constituent members 33H to 33J of the casing 33.

The refrigerant flow path module 40 according to the present embodiment is assembled as follows.

First, the coupling pipe T is joined to each of the constituent members 33G, 33H, 33I, and 33J of the casing 33 by brazing. Next, in a state where the valve body 60 is housed between the two divided bodies 32A and 32B (hollow portion 31A) constituting the flow path unit 32, the end surfaces 32A1 and 32B1 are butted against each other. Then, the flow path unit 32 is inserted into the constituent member 33G of the casing 33. At this time, the end portions of the coupling pipes T(51d and 56d) protruding inside the constituent member 33G are inserted into the corresponding refrigerant flow path.

Thereafter, the other constituent members 33H, 33I, and 33J of the casing 33 are superimposed on the outer face of the flow path unit 32. At this time, the end portions of the coupling pipes T protruding inside the constituent members 33H, 33I, and 33J are inserted into the corresponding refrigerant flow paths R1 and R2. Then, the other constituent members 33H, 33I, and 33J are joined to the constituent member 33G of the casing 33 by welding. Thereafter, the drive shaft 66 is attached to the valve body 60, and the drive unit 64 is linked to the drive shaft 66.

Thereafter, the groove 84 described with reference to FIG. 12 is preferably formed on the outer face of the flow path unit 32 in order to suppress the heat in the joint from being transferred to the flow path unit 32.

### [Third embodiment]

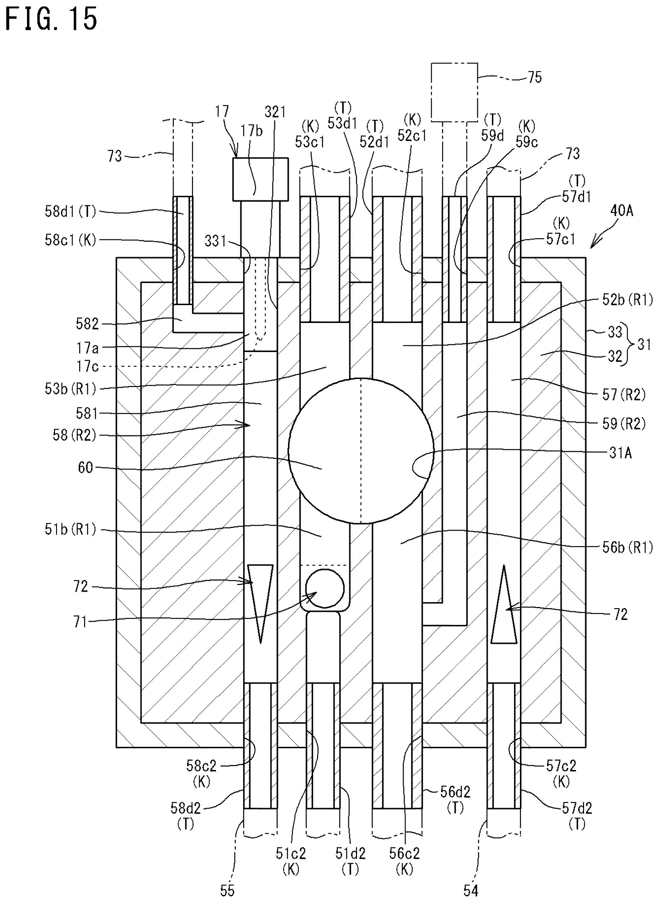

FIG. 15 is a sectional view schematically showing a structure of a refrigerant flow path module according to a third embodiment of the present disclosure.

In the first embodiment, as shown in FIG. 6, the refrigerant pipe 73 is connected to one end of the expansion valve 17, and the refrigerant flow path 58 (coupling pipe 58d1) of the flow path body 31 is connected to the other end of the expansion valve 17. In the present embodiment, as shown in FIG. 15, a part of the expansion valve 17 is accommodated in the flow path body 31. Specifically, the expansion valve 17 includes a valve main body 17a accommodated in the flow path body 31, and the drive unit 17b protruding from the flow path body 31. A valve body 17c driven by the drive unit 17b is built in the valve main body 17a. The valve body 17c has a needle shape, and moves up and down by the drive unit 17b to adjust a flow rate of the refrigerant. A hollow portion 321 that accommodates the valve main body 17a is formed in the flow path unit 32 of the flow path body 31, and an opening 331 for inserting the valve main body 17a is formed in the casing 33.

In the present embodiment, the refrigerant flow path 58 formed in the flow path body 31 includes a flow path portion 581 to which the other end of the expansion valve 17 is connected and a flow path portion 582 to which one end of the expansion valve 17 is connected. A lower end of the flow path portion 581 communicates with the opening 58c2 of the casing 33. An upper end of the flow path portion 582 communicates with the opening 58c1 of the casing 33.

Other configurations of the present embodiment are similar to the configurations of the first embodiment shown in FIG. 6, and will not be described in detail.

### [Fourth Embodiment]

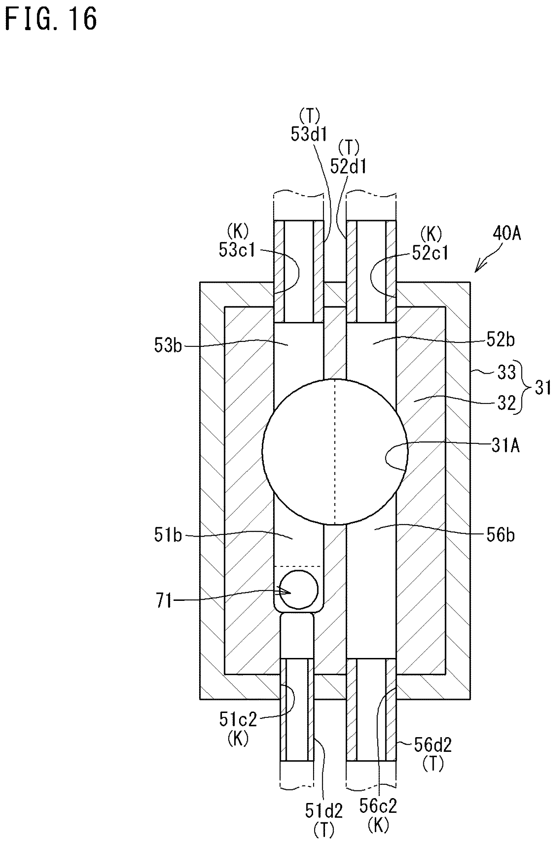

FIG. 16 is a sectional view schematically showing a structure of a refrigerant flow path module according to a fourth embodiment of the present disclosure.

As shown in FIG. 6, in the refrigerant flow path module 40 according to the first embodiment, the plurality of refrigerant flow paths 51b, 52b, 53b, 56b, 57, 58, and 59 formed in the flow path unit 32 are roughly divided into the refrigerant flow paths 51b, 52b, 53b, and 56b communicating with the hollow portion 31A and the refrigerant flow paths 57, 58, and 59 not communicating with the hollow portion. On the other hand, in the refrigerant flow path module 40 according to the present embodiment, all of the plurality of refrigerant flow paths 51b, 52b, 53b, and 56b formed in the flow path unit 32 communicate with the hollow portion 31A. Therefore, the flow path of the refrigerant flowing through the refrigerant flow paths 51b, 52b, 53b, and 56b of the flow path unit 32 is switched by the valve body 60 in the hollow portion 31A, and the flow is controlled.

The configurations of the refrigerant flow paths 51b, 52b, 53b, and 56b, the hollow portion 31A, and the valve body 60 according to the present embodiment are similar to those of the first embodiment, and will not be described in detail.

In the first embodiment, the refrigerant flow path communicating with the hollow portion 31A is referred to as the first refrigerant flow path, and the refrigerant flow path not communicating with the hollow portion 31A is referred to as the second refrigerant flow path. In the present embodiment, since all the refrigerant flow paths 51b, 52b, 53b, and 56b communicate with the hollow portion 31A, unlike the first and second embodiments, any of the refrigerant flow paths is set as the first refrigerant flow path and any of the other refrigerant flow paths is set as the second refrigerant flow path regardless of whether the refrigerant flow paths communicate with the hollow portion 31A.

In the present embodiment, since all the refrigerant flow paths 51b, 52b, 53b, and 56b communicate with the hollow portion 31A, the refrigerant flow path module 40 itself is substantially configured as the four-way switching valve (flow path switching valve) 18.

### [Fifth Embodiment]

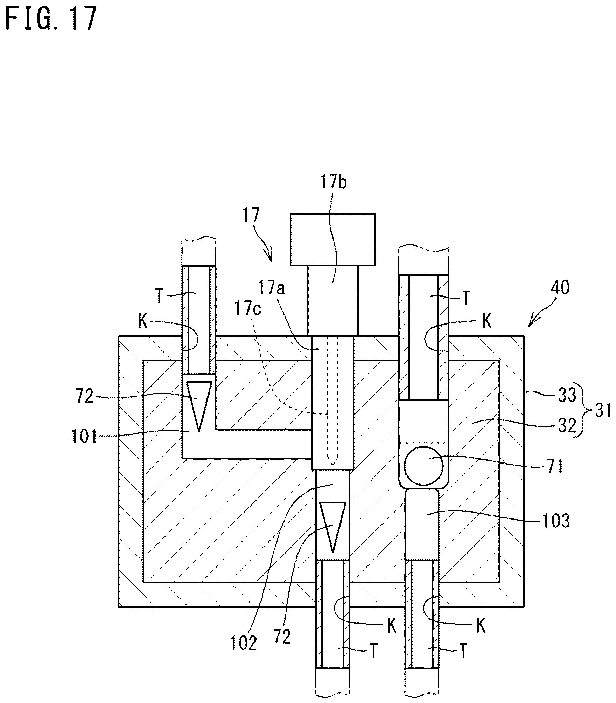

FIG. 17 is a sectional view schematically showing a structure of a refrigerant flow path module according to a fifth embodiment of the present disclosure.

In the first embodiment, as shown in FIG. 6, the valve body 60 of the four-way switching valve (flow path switching valve) 18 is accommodated in the hollow portion 31A formed in the flow path body 31 of the refrigerant flow path module 40. In the present embodiment, the hollow portion 3 1A in which the valve body 60 is accommodated is not formed in the flow path body 31. A plurality of refrigerant flow paths 101, 102, and 103 is formed in the flow path unit 32 according to the present embodiment. The refrigerant flow path 103 penetrates the flow path unit 32 up and down, and upper and lower ends of the refrigerant flow path 103 communicate with the opening K formed in the casing 33. The coupling pipe T is joined to each opening K, and the end portion of the coupling pipe T is inserted into the refrigerant flow path 103. The refrigerant flow path 103 is provided with the check valve 71.

In the refrigerant flow path module 40 according to the present embodiment, a part of the expansion valve 17 is accommodated in the flow path body 31 in a similar mode as in the third embodiment. The expansion valve 17 includes a valve main body 17a accommodated in the flow path body 31, and the drive unit 17b discharging from the flow path body 31. The valve body 17c driven by the drive unit 17b is built in the valve main body 17a. The valve body 17c has a needle shape, and moves up and down by the drive unit 17b to adjust the flow rate of the refrigerant.

In the present embodiment, the refrigerant flow path 101 formed in the flow path body 31 is connected to one end of the expansion valve 17, and the refrigerant flow path 102 is connected to the other end of the expansion valve 17. An upper end of the refrigerant flow path 101 and a lower end of the refrigerant flow path 102 communicate with the opening K of the casing 33. The coupling pipe T is joined to the opening K, and the end portion of the coupling pipe T is inserted into the refrigerant flow paths 101 and 102. The strainers 72 are inserted into the refrigerant flow paths 101 and 102.

In the first embodiment, the refrigerant flow path communicating with the hollow portion 31A is referred to as the first refrigerant flow path, and the refrigerant flow path not communicating with the hollow portion 31A is referred to as the second refrigerant flow path. In the present embodiment, since not all the refrigerant flow paths 51b, 52b, 53b, and 56b communicate with the hollow portion 31A, unlike the first and second embodiments, any of the refrigerant flow paths is set as the first refrigerant flow path and any of the other refrigerant flow paths is set as the second refrigerant flow path regardless of whether the refrigerant flow paths communicate with the hollow portion 31A.

In the present embodiment, any one or two of the expansion valve 17, the strainer 72, or the check valve 71 may be omitted.

### [Other embodiments]

In the above embodiment, of the plurality of refrigerant flow paths formed in the flow path unit 32, the refrigerant flow paths 57 and 58 not communicating with the hollow portion 31A accommodating the valve body 60 linearly penetrate the flow path unit 32, but may penetrate the flow path unit 32 in a refracted or curved state.

In the above embodiment, the seal portions 34a to 34d are formed on the inner surface of the hollow portion 31A in the flow path unit 32, but may be integrally formed around the openings 61a and 61b of the through hole (passage) 61 in the valve body 60. In this case, the distal ends of the seal portions 34a to 34d come into contact with the inner surface of the hollow portion 31A, and leakage of the refrigerant into the gap between the distal ends and the inner surface can be suppressed. The valve body 60 in which the seal portion is formed is preferably formed with a material having a tensile elastic modulus lower than that of the material of the flow path unit 32. It is therefore possible to suppress wear of the flow path unit 32 due to contact with the seal portion of the valve body 60.

In the refrigerant flow path module 40 according to the above embodiment, the high-pressure refrigerant flowing through the concave portion 62 of the valve body 60 and the refrigerant flow paths 51b, 53b, and 56b is configured to leak to the gap between the inner surface of the hollow portion 31A and the outer surface 60a of the valve body 60 and the outside of the flow path unit 32. However, the refrigerant flow path module 40 may be configured so as not to cause such leakage.

In the valve body 60 according to the above embodiment, the through hole 61 constituting a passage for the low-pressure refrigerant and the concave portion 62 constituting a passage for the high-pressure refrigerant are formed. However, the present disclosure is not limited to this configuration. For example, the valve body 60 may have a concave portion as a passage for the low-pressure refrigerant or a through hole as a passage for the high-pressure refrigerant. The valve body 60 is not limited to the spherical shape and the cylindrical shape as described above, and may have other shapes.

The axis C2 of the valve body 60 may face the horizontal direction or the up-down direction. The axis C2 of the valve body 60 may be oriented in a direction inclined with respect to the up-down direction and the horizontal direction.

In the above embodiment, the refrigerant flow path module 40 is also used as a four-way switching valve, but may be used as a three-way switching valve.

In the above embodiment, the valve body 60 of the four-way switching valve 18 is accommodated in the hollow portion 31A formed in the flow path body 31 (the flow path unit 32). However, a valve body of another valve, for example, a valve body of the expansion valve 17 that operates by electric power or a valve body of an electromagnetic valve that operates by electric power may be accommodated.

### [Functional effects of embodiments]

(1) The refrigerant flow path module 40 according to the above embodiment includes the flow path unit 32 provided with the first refrigerant flow path R1 (for example, the refrigerant flow paths 51b, 52b, 53b, and 56b) and the second refrigerant flow path R2 (for example, the refrigerant flow paths 57,58, and 59) through which the refrigerant flows, and the casing 33 that accommodates the flow path unit 32. The flow path unit 32 is formed with a synthetic resin or a material containing aluminum as a main component, and the casing 33 is formed with a steel material.
   In this configuration, since the flow path unit 32 including the first and second refrigerant flow paths R1 and R2 is formed with a material containing a synthetic resin or aluminum as a main component, the flow path unit 32 can be formed by die molding such as injection molding or die casting, and the manufacturability and processability of the flow path unit 32 can be enhanced. Since the flow path unit 32 is accommodated in the casing 33 including a steel material having higher rigidity than the flow path unit 32, the pressure resistance of the flow path unit 32 can be enhanced by the casing 33 even if a high pressure refrigerant flows in the first refrigerant flow path R1 and the second refrigerant flow path R2 and a high pressure is applied to the flow path unit 32. Since the flow path unit 32 according to the present embodiment is formed with a material containing a synthetic resin or aluminum as a main component, even a structure having the tube portion 81, the accommodating portion 82, and the rib 83 and having the clearance S between the rib 83 and the rib 83 can be easily molded by die molding. Since the flow path unit 32 includes the plurality of divided bodies 32A and 32B, the flow path unit can be molded easily by die molding.
(2) In the refrigerant flow path module 40 according to (1), in the above embodiment, the casing 33 has the openings K communicating with the first refrigerant flow path R1 and the second refrigerant flow path R2. The refrigerant flow path module 40 further includes the pipes (coupling pipes) T joined to the casing 33 at the peripheral edges of the openings K.
   Since the pipes T are joined at the peripheral edges of the openings K formed in the casing 33, this configuration can suppress leakage of the refrigerant through the gaps between the openings K and the pipes T.
(3) In the refrigerant flow path module 40 according to (1) or (2), in the above embodiment, the casing 33 includes stainless steel.
   Such a configuration can enhance corrosion resistance of the casing 33.
(4) In the refrigerant flow path module 40 according to any one of (1) to (3), in the above embodiment, the flow path unit 32 has the hollow portion 31A communicating with the first refrigerant flow path R1. The refrigerant flow path module 40 further includes the valve body 60 accommodated in the hollow portion 31A.
   In this configuration, since the flow path unit 32 is formed with synthetic resin or a material containing aluminum as a main component, the flow path unit 32 including the hollow portion 31A can be easily formed by die molding. The refrigerant flow path module 40 can be used as a valve such as a flow path switching valve that controls the flow of the refrigerant.
(5) In the refrigerant flow path module 40 according to (4), the valve body 60 includes passages 61 and 62 communicable with the first refrigerant flow path R1.
   Such a configuration can switch the flow path of the refrigerant by using the passages of the valve body 60.
(6) In the refrigerant flow path module 40 according to (4) or (5), in the above embodiment, the valve body 60 is formed with synthetic resin or a material containing aluminum as a main component.
   The valve body 60 can be easily formed by die molding, and the above configuration can enhance the manufacturability and processability of the valve body 60. In a case where the valve body 60 has the passages 61 and 62, the manufacturability and processability of the valve body 60 can be further enhanced.
(7) In the refrigerant flow path module 40 according to any one of (4) to (6), the second refrigerant flow path R2 does not communicate with the hollow portion 31A and penetrates the flow path unit 32.
   In this configuration, a flow of the refrigerant that is not directly affected by the flow path switching valve 18 can be formed by the second refrigerant flow path R2.
(8) A method for manufacturing the refrigerant flow path module 40 according to any one of (1) to (7) includes, a first step of die-molding the flow path unit 32 and a second step of accommodating the flow path unit 32 in the casing 33 in an order of the first step and the second step.
   In this configuration, in the first step, the first refrigerant flow path R1 and the second refrigerant flow path R2 can be easily formed in the flow path unit 32.
(9) A method for manufacturing the refrigerant flow path module 40 according to (2) includes a first step of inserting the pipes T into the openings K and welding the pipes to the casing 33, and a second step of accommodating the flow path unit 32 in the casing 33 and connecting the pipes T to the first and second refrigerant flow path R1, R2 in an order of the first step and the second step.
   This configuration can prevent heat at the time of welding the pipes T to the casing 33 from being transmitted to the flow path unit 32.
(10) In a method for manufacturing the refrigerant flow path module 40 according to any one of (1) to (7), the casing 33 of the refrigerant flow path module 40 includes a plurality of constituent members 33D, 33E, 33F, 33G, 33H, 33I, and 33J, the method includes a first step of accommodating the flow path unit 32 in the casing 33, and a second step of joining the plurality of constituent members 33D, 33E, 33F, 33G, 33H, 33I, and 33J by welding in an order of the first step and the second step, and in the second step, the gap t is formed between the flow path unit 32 accommodated in the casing 33 and the joint of the plurality of constituent members 33D, 33E, 33F, 33G, 33H, 33I, and 33J.

This configuration can suppress transfer of heat to the flow path unit 32 when the plurality of constituent members 33D, 33E, 33F, 33G, 33H, 33I, and 33J constituting the casing 33 is welded.

While the embodiments have been described above, it will be understood that various changes in forms and details can be made without departing from the gist and scope of the claims.

### REFERENCE SIGNS LIST

31A hollow portion
32 flow path unit
33 casing
33D constituent member
33E constituent member
33F constituent member
33G constituent member
33H constituent member
33I constituent member
33J constituent member
40 refrigerant flow path module
60 valve body
61 through hole (passage)
62 concave portion (passage)
K opening
R1 refrigerant flow path (first refrigerant flow path)
R2 refrigerant flow path (second refrigerant flow path)
T coupling pipe

## Claims

1. A refrigerant flow path module comprising:
a flow path unit (32) provided with a first refrigerant flow path (R1) and a second refrigerant flow path (R2) through which a refrigerant flows; and
a casing (33) that accommodates the flow path unit (32), wherein
the flow path unit (32) is formed with a synthetic resin or a material containing aluminum as a main component, and
the casing (33) is formed with a steel material.

2. The refrigerant flow path module according to claim 1, wherein
the casing (33) has openings (K) communicating with the first refrigerant flow path (R1) and the second refrigerant flow path (R2), and
the refrigerant flow path module further includes pipes (T) joined to the casing (33) at peripheral edges of the openings (K).

3. The refrigerant flow path module according to claim 1 or 2, wherein the casing (33) includes stainless steel.

4. The refrigerant flow path module according to any one of claims 1 to 3, wherein
the flow path unit (32) includes a hollow portion (31A) communicating with the first refrigerant flow path (R1), and
the refrigerant flow path module further includes a valve body (60) accommodated in the hollow portion (31A).

5. The refrigerant flow path module according to claim 4, wherein the valve body (60) includes a passage (61, 62) communicable with the first refrigerant flow path (R1).

6. The refrigerant flow path module according to claim 4 or 5, wherein the valve body (60) is formed with synthetic resin or a material containing aluminum as a main component.

7. The refrigerant flow path module according to any one of claims 4 to 7, wherein the second refrigerant flow path (R2) does not communicate with the hollow portion (31A) and penetrates the flow path unit (32).

8. A method for manufacturing the refrigerant flow path module according to any one of claims 1 to 7, the method comprising:
a first step of die-molding the flow path unit (32); and
a second step of accommodating the flow path unit (32) in the casing (33) in an order of the first step and the second step.

9. A method for manufacturing the refrigerant flow path module according to claim 2, the method comprising:
a first step of inserting the pipes (T) into the openings (K) and welding the pipes (T) to the casing (33); and
a second step of accommodating the flow path unit (32) in the casing (33) and connecting the pipes (T) to the first and second refrigerant flow path (R1, R2) in an order of the first step and the second step.

10. A method for manufacturing the refrigerant flow path module according to any one of claims 1 to 7, wherein
the casing (33) of the refrigerant flow path module includes a plurality of constituent members (33D, 33E, 33F, 33G, 33H, 33I, 33J),
the method includes
a first step of accommodating the flow path unit (32) in the casing (33), and
a second step of joining the plurality of constituent members (33D, 33E, 33F, 33G, 33H, 33I, 33J) by welding in an order of the first step and the second step, and
in the second step, a gap (t) is formed between the flow path unit (32) accommodated in the casing (33) and a joint of the plurality of constituent members (33D, 33E, 33F, 33G, 33H, 33I, 33J).
